# EUROPÄISCHE PATENTSCHRIFT

(11) **EP 3 226 125 B1**
(45) Veröffentlichungstag und Bekanntmachung des Hinweises auf die Patenterteilung: **28.07.2021**
(21) Anmeldenummer: 17163579.0
(22) Anmeldetag: 29.03.2017
(51) Int. Cl.: G06F 9/451, G06F 40/106, G06F 40/177

(54) **VERFAHREN ZUM ANZEIGEN EINER INFORMATION AUF EINER STEHENDEN ANZEIGEFLÄCHE**
METHOD FOR DISPLAYING INFORMATION ON A STANDING DISPLAY SURFACE
PROCÉDÉ D'AFFICHAGE D'UNE INFORMATION SUR UNE SURFACE D'AFFICHAGE VERTICALE

(30) Priorität: 30.03.2016 AT 1632016
(43) Veröffentlichungstag der Anmeldung: 04.10.2017
(73) Patentinhaber: PKE Holding AG, 1100 Wien (AT)
(72) Erfinder: KUHN, Walter, 1060 Wien (AT); RUMPLER, Michael, 2392 Gruberau (AT)
(74) Vertreter: Burgstaller, Peter

(56) Entgegenhaltungen:
- GB-A- 2 452 635
- US-A1- 2006 250 834
- US-A1- 2011 289 397

## Beschreibung

Die hier offenbarte Erfindung betrifft ein Verfahren zur Auswahl einer Information umfassend erste Inhalte und zweite Inhalte, welche ersten Inhalte durch erste Attribute und welche zweite Inhalte durch zweite Attribute definiert werden, wobei die ersten Inhalte und die zweiten Inhalte in einem funktionellen Zusammenhang stehen, zur Anzeige auf einer Anzeigefläche umfassend den Schritt des Bestimmens der Abmessungen der Anzeigefläche.

Ein funktioneller Zusammenhang zwischen einem ersten Inhalt und einem zweiten Inhalt besteht, wenn der erste Inhalt für einen Gebrauch und/oder eine Funktonalität des zweiten Inhaltes oder umgekehrt notwendig ist. Ein erster Inhalt kann beispielsweise ein Schlüssel oder mit einem Schlüssel verbunden sein, welcher Schlüssel zum Benützen eines Autos als ein zweiter Inhalt oder als ein mit dem zweiten Inhalt verbundenes Objekt notwendig ist.Die im Folgenden offenbarte Erfindung basiert auf dem Problem, dass eine aus einer Vielzahl von ersten Inhalten und einer Vielzahl von zweiten Inhalten gebildete Information wegen der Vielzahl von Inhalten nicht zu einem Zeitpunkt auf einer stehenden Anzeigefläche angezeigt werden können, sodass der Benutzer die Information gut lesen und geistig erfassen kann. Eine gute Lesbarkeit bedingt unter anderem, dass die Inhalte hinreichend groß und übersichtlich angezeigt werden.

Die Dokumente US20110289387 und US2006250834 offenbaren keine Verfahren, bei welchen Verfahren erste Inhalte und zweite Inhalte in Abhängigkeit eines funktionellen Zusammenhanges zwischen ersten Attributen des ersten Inhaltes und zweiten Attributen des zweiten Inhaltes angezeigt werden.

Die Verfahren nach dem Stand der Technik versuchen das Problem der Anzeige einer Vielzahl von Inhalten durch das Scrollen von angezeigten Teilen zu lösen. Ein Scrollen eines Anzeigeausschnittes steht jedoch im Widerspruch zu einer übersichtlichen Anzeige der Information, da nur eine stehende Information sehr übersichtlich angezeigt werden kann.

Das hier diskutierte Verfahren bietet vor allem in der Steuerungstechnik, insbesondere in der Sicherheitstechnik eine Lösung zur Erstellung einer für den Benutzer übersichtlichen Anzeige. In der Sicherheitstechnik stellt sich insbesondere die Aufgabe, dass eine Information umfassend erste Inhalte wie beispielsweise Betätigungselemente für Schlösser und zweite Inhalte wie die in einem funktionellen Zusammenhang mit den Betätigungselementen stehenden Schlösser angezeigt wird, sodass der Benutzer sich möglichst rasch einen Überblick über die aktuelle Lage verschaffen kann. Insbesondere in einem Alarmfall muss eine gezielte Auswahl der anzuzeigenden Information leicht durchführbar sein. Es wird auch ein dritter Inhalt angezeigt, welcher einen Zustand im Kreuzungsbereich zwischen erster und zweiter Information betrifft. Letzteres kann beispielsweise sein, ob mit Hilfe eines Betätigungselementes (erster Inhalt) ein Schloss (zweiter Inhalt) eine Betätigung (dritter Inhalt) erfolgte.

Das erfindungsgemäße Verfahren basiert auf der gezielten Auswahl der anzuzeigenden Inhalte, sodass die Informationen auf ein Mal auf der Anzeigefläche angezeigt werden können. Das erfindungsgemäße Verfahren kann interaktiv ausgeführt werden.

Die folgende Beschreibung der Erfindung basiert auf der Vereinfachung, dass die ersten Inhalte und die zweiten Inhalte in einem passenden funktionellen Zusammenhang stehen. Der erste Inhalt oder das mit dem ersten Inhalt verknüpfte Objekt ist in der Lage, eine Funktion des zweiten Inhaltes oder des mit dem zweiten Inhalt verknüpften Objektes auszulösen. In Bezugnahme auf das obige Beispiel ist der als erster Inhalt angeführte Schlüssel aus einer Menge von Schlüsseln der passende Schlüssel zum Benutzen des als zweiter Inhalt definierten Autos.

Gleichsam kann jedoch das erfindungsgemäße Verfahren abdecken, dass eine als erster Inhalt definierte Berechtigungskarte in eine Öffnung eines als zweiter Inhalt definierten Kartenlesegerätes geschoben werden kann.

Unter Verweis auf T84/0208 ist eine (gegebenenfalls digitale) Bildverarbeitung ein auf eine physikalische Erscheinung angewandtes technisches Verfahren. Eine physikalische Erscheinung ist ein als elektrisches Signal gespeichertes Bild. Damit ist das im Folgenden diskutierte erfindungsgemäße Verfahren weder als eine mathematische Methode noch als ein Computerprogramm als ein solches anzusehen.

Erfindungsgemäß wird die oben erwähnte Aufgabenstellung dadurch gelöst, dass ein erster Teilbereich von ersten Attributen ausgewählt wird, durch welche Auswahl eine erste Teilmenge von ersten Inhalten, welche erste Teilmenge von ersten Inhalten die ersten Attribute aufweisen, und eine zweite Teilmenge von zweiten Inhalten ausgewählt werden, welche zweite Teilmenge von zweiten Inhalten die zweiten Attribute aufweisen, welche zweiten Attribute einen funktionellen Zusammenhang mit den ersten Attributen der ausgewählten ersten Teilmenge der ersten Inhalte aufweisen, und angezeigt wird, ob die ausgewählte Information auf der Anzeigefläche angezeigt werden kann oder um welches Maß die Anzeigefläche bei Anzeige der Information überschritten wird.

Überschreitet der Flächenbedarf der ausgewählten Information die Anzeigefläche um ein geringes Ausmaß, so kann die Anzeige Bedienelemente umfassen, mittels welcher Bedienelemente der Flächenbedarf an die vorhandene Anzeigefläche angepasst wird. Das geringe Ausmaß kann indirekt dadurch definiert sein, dass die auf der Anzeigefläche anzuzeigenden Inhalte nicht beispielsweise eine Mindestschriftgröße unterschreiten.

Das erfindungsgemäße Verfahren kann die Anzeige der ausgewählten ersten Teilmenge der ersten Inhalte und der zweiten Teilmenge der zweiten Inhalte umfassen. Der Fachmann erkennt, dass das Anzeigen von ersten Inhalten und zweiten Inhalten, welche erste beziehungsweise zweite Attribute aufweisen, naheliegend zu einem weiteren Anzeigen von ersten und zweiten Inhalten ist, welche erste beziehungsweise zweite Inhalte die zweiten Attribute eben nicht aufweisen.

Die ersten Inhalte und die zweiten Inhalte stehen in einem funktionellen Zusammenhang. Zwangsweise stehen die ersten Teilmengen und die zweiten Teilmengen ebenso in einem funktionellen Zusammenhang. Ein funktioneller Zusammenhang kann dadurch gegeben sein, dass eine als erster Inhalt anzeigbare Vorrichtung oder ein ebensolches Verfahren die Betätigung einer als zweiter Inhalt anzeigbaren Vorrichtung oder die Durchführung als ebensolches anzeigbares Verfahren bedingt.

Beispielsweise erlaubt eine Zutrittskarte mit den notwendigen Berechtigungen (erster Inhalt) das Entsperren eines Türschlosses (zweiter Inhalt). Die Zutrittskarte und das Türschloss stehen in einem funktionellen Zusammenhang; der funktionelle Zusammenhang ist überdies ein funktioneller Zusammenhang, weil auf der Karte die notwendigen Berechtigungen gespeichert sind, um das Türschloss zu öffnen.

Das erfindungsgemäße Verfahren nutzt diesen funktionellen Zusammenhang aus, um die Menge der anzuzeigenden ersten Inhalte und zweiten Inhalte wirksam zu begrenzen.

Durch die Auswahl der ersten Teilmengen erster Inhalte werden jene zweiten Teilmengen der zweiten Inhalte ausgewählt, wobei die ersten Attribute in einem funktionellen Zusammenhang zu den zweiten Attributen stehen. Durch die Auswahl der ersten Teilmenge der ersten Inhalte wird der funktionelle Zusammenhang zwischen den ersten Attributen und den zweiten Attributen evaluiert, sodass die zweiten Teilmengen der zweiten Inhalte ausgewählt werden, welche die zweiten Attribute aufweisen, welche zweiten Attribute in dem funktionellen Zusammenhang mit den ersten Attributen stehen.

Das erfindungsgemäße Verfahren kann den weiteren Verfahrensschritt umfassen, dass die ausgewählte Information auf der Anzeigefläche angezeigt wird.

Das erfindungsgemäße Verfahren kann auch eine Anzeige zur Aufforderung einer Auswahl weiterer erster Attribute und/oder zweiter Attribute umfassen. Durch die Auswahl weiterer erster Attribute und weiterer zweiter Attribute kann die Anzahl der ausgewählten und anzuzeigenden ersten Inhalte und zweiten Inhalte weiter begrenzt werden.

Das erfindungsgemäße Verfahren kann weiters den Schritt umfassen, dass die Auswahl des ersten Teilbereiches der ersten Attribute über eine Eingabe mittels einer Eingabeeinheit durchgeführt wird, wobei die ausgewählten Inhalte auf der Anzeigefläche angezeigt werden.

Die Eingabeeinheit kann beispielsweise eine Auswahlanzeigefläche sein, welche ein Teil der Anzeigefläche ist. Die Eingabeeinheit kann aktiviert werden, wenn eine Auswahl notwendig ist.

Das erfindungsgemäße Verfahren kann eine Berücksichtigung einer zeitlichen Einschränkung des funktionellen Zusammenhanges zwischen dem ersten Attribut und dem zweiten Attribut umfassen. Die Auswahl des ersten Attributes bedingt somit eine bedingte Auswahl des zweiten Attributes.

Das erfindungsgemäße Verfahren kann. auch die Anzeige dritter Inhalte umfassen, welche dritte Inhalte einen Status des funktionellen Zusammenhanges zwischen dem ersten Attribut und dem zweiten Attribut anzeigen. Unter Verweis auf obige Definition des funktionellen Zusammenhanges zwischen erstem Inhalt und zweitem Inhalt betreffen die dritten Inhalte den Status der Betätigung der Vorrichtung oder der Durchfahrung des Verfahrens.

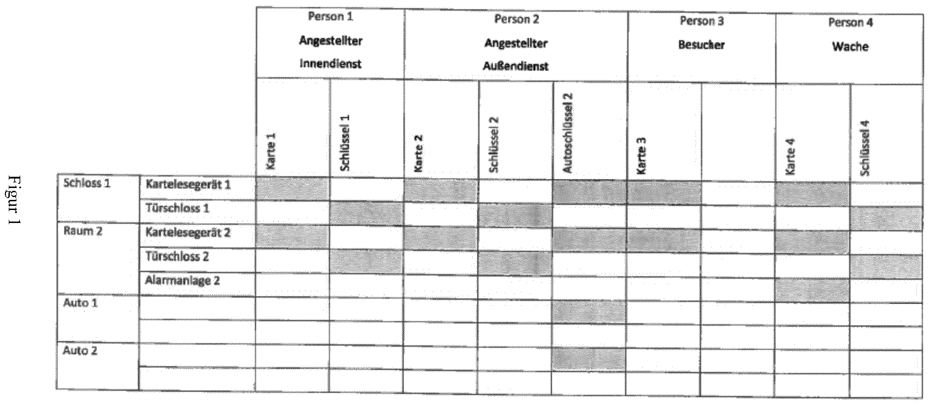

Figur 1 zeigt eine Anwendung des erfindungsgemäßen Verfahrens im Bereich der Sicherheitstechnik.

Es sind in der als Figur 1 angeführte Tabelle in horizontaler Richtung die Personen 1 bis 4 als erste Inhalte angezeigt. Die ersten Inhalte umfassen erste Attribute, welche in unterschiedlichen ersten Attributsebenen dargestellt sind. Die erste Attributsebene der ersten Inhalte betrifft Attribute der Stellung zum Unternehmen wie Angestellter (Innendienst, Augendienst), Besucher oder Wache. Die zweite Attributsebene der ersten Inhalte listet die Attribute der Berechtigung auf, die die Person hat, wie eine Karte oder einen Schlassel.

In vertikaler Richtung sind die zweiten Inhalte aufgelistet. Die zweiten Inhalte betreffen ortliche Gegebenheiten wie Räume oder Autos. In der ersten Attributsebene der zweiten Inhalte sind als Attribute die mechanischen Zutrittskontrollvorrichtungen wie Kartenlesegerat und Türschloss oder Autoschloss angeführt. Die Person muss diese Zutrittskontrollvorrichtungen betätigen, um die ortliche Gegebenheit betreten zu können.

Die als Figur 1 eingeführte Tabelle umfasst neun Zeilen und neun Spalten, sohin einundachtzig Felder zur Anzeige der möglichen Berechtigungen. Üblicher Weise umfasst eine Obersichtstabelle zur Darstellung der Berechtigung nicht die zum Zwecke der übersichtlichen Darstellung reduzierte Anzahl von vier Personen, sondern eine Vielzahl von Personen. Ebenso sind bei einer üblichen Betrachtung nicht nur zwei Raume und zwei Autos, sondern eine Vielzahl von örtlichen Gegebenheiten gelistet.

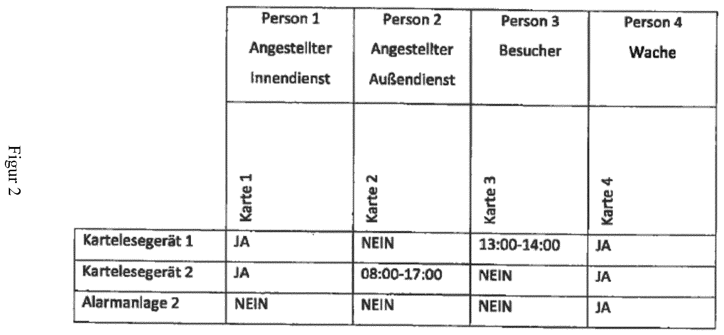

Zur übersichtlichen Darstellung der Figur 1 wurde ein Querformat gewählt. Die Aufgabe der hier offenbarten Erfindung, nämlich eine Reduktion der Anzahl der anzuzeigenden Information für eine übersichtliche Darstellung, wird hier anhand der Figur 1 und Figur 2 so veranschaulicht, dass die Informationen aus Figur 1 ausgewählt werden, sodass bei Figur 2 kein Querformat zur übersichtlichen Darstellung notwendig ist.

Das Ausmessen der Anzeigefläche geschieht im Rahmen des durch Figur 1 und Figur 2 veranschaulichten Anwendungsbeispiels des erfindungsgemäßen Verfahrens durch das Ausmessen der Breite einer Seite als ein die Anzeigefläche bestimmendes Maß.

Die ersten Inhalte und die zweiten Inhalte stehen in einem funktionellen Zusammenhang, nämlich der zu kontrollierende Zutritt der einzelnen Personen in die als zweite Inhalte angeführten räumlichen Gegebenheiten.
Durch die Auswahl von ersten Attributen wie beispielsweise das Attribut "Karte" in der Reihe der ersten Inhalte werden die ersten Inhalte ausgewählt, welche das erste Attribut "Karte" umfassen. Hierdurch werden unter Anwendung des erfindungsgemäßen Verfahrens jene zweiten Inhalte ausgewählt, welche zweite Attribute umfassen, die in einem funktionellen Zusammenhang mit dem ausgewählten ersten Attribut stehen. Mittels einer als erstes Attribut gewählten "Karte" kann ein "Türlesegerät" betätigt werden. Durch die Wahl des ersten Attributes "Karte" werden somit jene zweiten Inhalte ausgewählt, die ein "Kartenlesegerät" umfassen. In Figur 1 sind die funktionellen Zusammenhange durch eine graue Schattierung der betreffenden Felder hinterlegt.

Durch die Wahl des ersten Attributes "Karte" wird somit die Anzahl der anzuzeigenden Felder von Einundachtzig auf Neun reduziert, wobei hier angenommen wird, dass die "Alarmanlage" auch mittels Karte bedienbar ist. Die Information wird durch die anzuzeigenden ersten Inhalte und zweiten Inhalte angezeigt. Neun Felder sind übersichtlich anzeigbar, sodass eine Aufforderung zur Auswahl weiterer erster Attribute und/oder zweiter Attribute entfallen kann.

Es sind in Figur 2 dritte Inhalte im Überlappungsbereich zwischen ersten Inhalten und zweiten Inhalten eingetragen, welche dritte Inhalte einen Status des funktionellen Zusammenhanges zwischen dem ersten Attribut und dem zweiten Attribut anzeigen. Bei diesem Anwendungsbeispiel zeigen die dritten Inhalte an, ob mit Hilfe der "Karte" das "Kartenlesegerat" betätigt wurde, um sich Zugang zu einem der Raume zu verschaffen.

Der funktionelle Zusammenhang zwischen dem ersten Attribut und dem zweiten Attribut kann mit einer zeitlichen Einschränkung belegt sein, das heißt die Person 1 hat beispielsweise nur in einer definierten Zeitspanne die Berechtigung, mittels der "Karte" das "Kartenlesegerat" zu betätigen. Derartige Beschränkungen können als dritte Inhalte angezeigt werden. In Figur 2 sind derartige Beschränkungen einschließlich der oben angeführten zeitlichen Beschränkungen beispielhaft eingetragen.

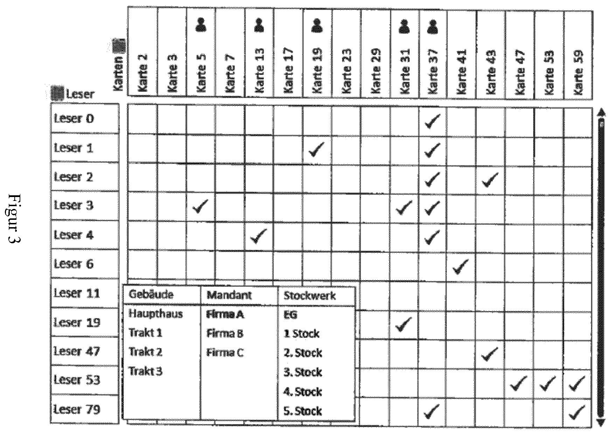

Figur 3 zeigt ein weiteres Anwendungsbeispiel des erfindungsgemäßen Verfahrens. Figur 3 zeigt eine Anzeigefläche während der Durchführung des erfindungsgemäßen Verfahrens zur Auswahl von Informationen umfassend erste Inhalte (Karten) und zweite Inhalte (Leser).

Die ersten Inhalte (Karten) werden durch die ersten Attribute, nämlich dem Halter der Karte (Mandant der Firma A, Mandant der Firma B, Mandant der Firma C) definiert. Die zweiten Inhalte (Leser) werden durch die zweiten Attribute, nämlich den Standort des Lesers (Trakt, Stockwerk) definiert. Die Attribute der Inhalte stehen insofern in einem funktionellen Zusammenhang, als dass nach dem Lesen der Karte durch den Leser ein weiterer Vorgang initiiert wird. Der funktionelle Zusammenhang zwischen dem ersten Inhalt und dem zweiten Inhalt wird in Form eines Häkchens angezeigt, welches Häkchen die Aktivierung einer weiteren Funktion durch das Lesen der Karte mittels des Lesers anzeigt.

Die Anzeigefläche umfasst eine Eingabefläche, in welche die Attribute ausgewählt werden. Die durch die Auswahl der ersten Attribute ausgewählten Teilmengen werden in der Anzeigefläche angezeigt. Der Scrollbar in der Anzeigefläche erstreckt sich über die gesamte Höhe der Anzeigefläche; es werden somit alle ausgewählten Teilmengen angezeigt. Der Benutzer erhalt somit einen guten Überblick über die funktionellen Zusammenhänge zwischen den Inhalten in Abhängigkeit der Auswahl von Attributen.

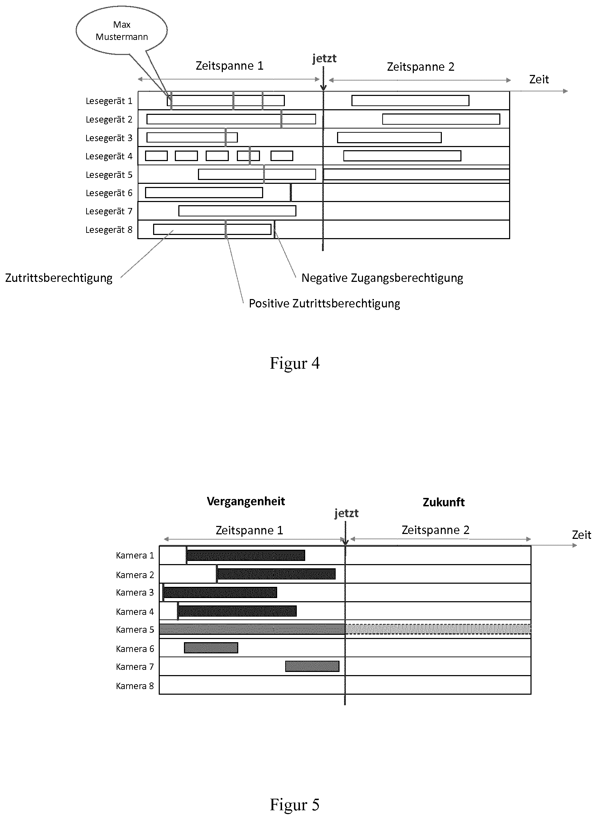

Figur 4 zeigt eine weitere Anwendungsmöglichkeit des erfindungsgemäßen Verfahrens.

Der erste Inhalt "Zeit" umfasst eine Zeitspanne 1 und eine Zeitspanne 2 als erste Attribute, wobei die Zeitspanne 1 in der Vergangenheit und die Zeitspanne 2 in der Zukunft liegt. Der erste Inhalt "Zeit" wird somit durch die ersten Attribute Zeitspannen definiert.

Die durch Lesegeräte definierten zweiten Inhalte umfassen die zweiten Attribute der Zugangsberechtigung in das Gebäude. Weitere zweite Attribute können beispielsweise die positive Zutrittsberechtigung, die negative Zugangsberechtigung und/oder eine erteilte Zugangsberechtigung nur im Beisein einer weiteren Person (in Figur 4 nicht dargestellt) und/oder der Name des Benutzers sein. Der Name des Benutzers als zweites Attribut kann als Pop-up angezeigt werden. Die zweiten Inhalte werden somit durch die zweiten Attribute definiert.

Die ersten Inhalte und die zweiten Inhalte stehen in einem funktionellen Zusammenhang zueinander. Bei dem anhand von Figur 4 diskutierten Anwendungsbeispiel des erfindungsgemäßen Verfahrens liegt der funktionelle Zusammenhang zwischen den ersten Inhalten und den zweiten Inhalten unter anderem darin, dass ein Lesegerät in definierten Zeitspannen einen Zugang zu dem Gebäude erteilt.

Es wird die Größe der Anzeigefläche bestimmt. Dies kann beispielsweise durch Abmessen der zur Verfügung stehenden oder zugeteilten Anzeigefläche sein. Die zugeteilte Anzeigefläche kann beispielsweise ein Fenster sein. Da die Größe des zugewiesenen Fensters ständig durch den Benutzer verändert werden kann, kann dieser Verfahrensschritt ständig wiederholt werden.

Durch die Auswahl erster Inhalte wird eine zu betrachtende Zeitspanne gewählt, welche der Benutzer betrachten möchte. In der ausgewählten Zeitspanne haben die durchzweite Inhalte definierten Benutzer Zugang zu einem Gebäude.

Durch die Auswahl einer ersten Teilmenge von ersten Inhalten, nämlich die Auswahl einer Zeitspanne aus der zu betrachtenden Zeitspanne werden diejenigen zweiten Inhalte gewählt. Bei dem diskutierten Anwendungsbeispiel werden die Personen ausgewählt, welche Personen als zweites Attribut eine positive Zugangsberechtigung zu dem Gebäude haben.

Es besteht sohin ein funktioneller Zusammenhang zwischen den ersten Inhalten und den zweiten Inhalten durch die positive Zugangsberechtigung.

Es wird angezeigt, ob die ausgewählte Information auf der Anzeigefläche angezeigt werden kann oder um welches Maß die Anzeigefläche bei Anzeige der Information überschritten wird. Figur 4 veranschaulicht den Fall, dass die durch die direkte Auswahl der ersten Inhalte und durch die indirekte Auswahl der zweiten Inhalte anzuzeigende Information auf dem Bildschirm angezeigt werden kann.

Die zu betrachtende Zeitspanne und/oder die als erste Teilmenge ausgewählte Zeitspanne umfasst bei dem anhand von Figur 4 diskutierten Anwendungsbeispiel eine vergangene Teilzeitspanne und eine zukünftige Teilzeitspanne. Hierzu ergänzend wird die aktuelle Zeit angezeigt, wobei die in Form der vertikalen Linie angezeigte aktuelle Zeit laufend aktualisiert wird.

Figur 5 zeigt eine weitere Anwendungsmöglichkeit des erfindungsgemäßen Verfahrens.

Der erste Inhalt "Zeit" umfasst wiederum Zeitspannen als erste Attribute. Ein erstes Attribut ist eine Zeitspanne 1 in der Vergangenheit. Ein weiteres erstes Attribut ist eine Zeitspanne 2 in der Zukunft, wobei die in der Vergangenheit liegende Zeitspanne 1 und die in der Zukunft liegende Zeitspanne 2 liegende Zeitspanne 2 in Abhängigkeit eines "jetzt"-Zeitpunktes unter Anwendung der gängigen Lehre definiert werden. Der erste Inhalt "Zeit" wird somit durch die ersten Attribute "Zeitspannen" definiert.

Es sind Kameras als zweite Inhalte definiert, wobei die Kamera 1 bis Kamera 8 zweite Attribute und die jeweilige Funktion der Kameras weitere zweite Attribute sind.

Die ersten Inhalte und die zweiten Inhalte stehen in einem funktionellen Zusammenhang zueinander. Bei dem anhand von Figur 5 diskutierten Anwendungsbeispiel des erfindungsgemäßen Verfahrens liegt der funktionelle Zusammenhang zwischen den ersten Inhalten und den zweiten Inhalten unter anderem darin, dass eine Kamera aus der Gruppe Kamera 1 bis Kamera 8 filmt (Funktion der Kamera). Durch die Auswahl einer ersten Zeitspanne 1 und einer zweiten Zeitspanne 2 werden die Kameras angezeigt, welche Kameras in diesen Zeitspannen filmen.

Die Vorgabe der in der Vergangenheit liegenden Zeitspanne 1, in welche die Kameras filmen, ist durch das Erkennen von Bewegungen und/oder durch eine Dauerschaltung und/oder durch eine manuelle Steuerung und/oder durch eine Zeitschaltung vorgegeben.

Die Vorgabe der in der Zukunft liegenden Zeitspanne 2, in welcher die Kameras filmen, ist durch eine Zeitschaltung und/oder durch eine Dauerschaltung vorgegeben. Die Zeitspanne 2 ist im Wesentlichen durch eine Planung vorgegeben.

Es wird die Größe der Anzeigefläche bestimmt. Dies kann beispielsweise durch Abmessen der zur Verfügung stehenden oder zugeteilten Anzeigefläche sein. Die zugeteilte Anzeigefläche kann beispielsweise ein Fenster sein. Da die Größe des zugewiesenen Fensters ständig durch den Benutzer verändert werden kann, kann dieser Verfahrensschritt ständig wiederholt werden.

Durch die Auswahl erster Inhalte werden die Zeitspanne 1 und die Zeitspanne 2 gewählt, welche der Benutzer betrachten möchte. In den ausgewählten Zeitspannen filmen die Kameras 1 bis 8 zumindest ein Mal.

Es besteht sohin ein funktioneller Zusammenhang zwischen den ersten Inhalten und den zweiten Inhalten durch die Funktion der Kameras.

Es wird angezeigt, ob die ausgewählte Information auf der Anzeigefläche angezeigt werden kann oder um welches Maß die Anzeigefläche bei Anzeige der Information überschritten wird. Figur 5 veranschaulicht den Fall, dass die durch die direkte Auswahl der ersten Inhalte und durch die indirekte Auswahl der zweiten Inhalte anzuzeigende Information auf dem Bildschirm angezeigt werden kann.

Die zu betrachtende Zeitspanne wird durch die erste, in der Vergangenheit liegende Zeitspanne und die in der Zukunft liegende Zeitspanne definiert. Hierzu ergänzend wird die aktuelle Zeit angezeigt, wobei die in Form der vertikalen Linie angezeigte aktuelle Zeit laufend aktualisiert wird. Die Anzeige einer ausgewählten Zeitspanne 1 und einer ausgewählten Zeitspanne 2 im Zusammenhang mit der aktuellen Zeit kann auch ohne die Auswahl der ersten Inhalte und der zweiten Inhalte erfolgen.

## Patentansprüche

1. Verfahren zur Auswahl einer Information umfassend erste Inhalte und zweite Inhalte, welche ersten Inhalte durch erste Attribute und welche zweite Inhalte durch zweite Attribute definiert werden,
wobei ein funktioneller Zusammenhang zwischen den ersten Inhalten und den zweiten Inhalten dadurch gegeben ist, dass
eine als erster Inhalt anzeigbare Vorrichtung oder ein als erster Inhalt anzeigbares Verfahren eine Betätigung einer als zweiter Inhalt anzeigbaren weiteren Vorrichtung oder eine Durchführung eines als zweiter Inhalt anzeigbaren weiteren Verfahrens bedingt,
zur Anzeige auf einer Anzeigefläche eines Bildschirms umfassend die folgenden Schritte:
- Bestimmen der Abmessungen der Anzeigefläche,
- Auswahl eines ersten Teilbereiches von ersten Attributen,
durch welche Auswahl eine erste Teilmenge von ersten Inhalten, welche erste Teilmenge von ersten Inhalten die ersten Attribute aufweisen, und eine zweite Teilmenge von zweiten Inhalten ausgewählt werden, welche zweite Teilmenge von zweiten Inhalten die zweiten Attribute aufweisen, welche zweiten Attribute einen funktionellen Zusammenhang mit den ersten Attributen der ausgewählten ersten Teilmenge der ersten Inhalte aufweisen,
- Anzeige, ob die ausgewählte Information auf der Anzeigefläche angezeigt werden kann oder um welches Maß die Anzeigefläche bei Anzeige der Information überschritten wird,
- Anzeige einer Aufforderung zur Auswahl weiterer erster Attribute und/oder zweiter Attribute,
- Anzeige der ausgewählten Information auf der Anzeigefläche, wobei auch dritte Inhalte angezeigt werden, welche einen Status des zeitlichen Zusammenhanges zwischen den ausgewählten weiteren ersten und/oder zweiten Attributen anzeigen.

2. Verfahren nach Anspruch 1, wobei die Auswahl des ersten Teilbereiches über eine Eingabe mittels einer Eingabeeinheit durchgeführt wird, wobei die ausgewählten Inhalte auf der Anzeigefläche angezeigt werden.

## Claims

1. A method for selecting information comprising first content and second content, which first content is defined by first attributes, and which second content is defined by second attributes,
wherein a functional association between the first content and the second content is constituted in that
a device or process displayable as first content conditions operation of a further device displayable as second content or execution of a further process displayable as second content to be displayed on a display surface of a screen, comprising the following steps:
- determining the dimensions of the display surface,
- selecting a first subregion of first attributes,
by which selection a first subset of first content, which first subset of first content includes the first attributes, and a second subset of second content, which second subset of second content includes the second attributes are selected, which second attributes have a functional association with the first attitudes of the selected first subset of the first content,
- displaying whether the selected information can be displayed on the display surface or by which amount the displaying surface is exceeded when displaying the information,
- displaying a request to select further first attributes and/or second attributes,
- displaying the selected information on the display surface, wherein third content, which displays a status of temporal association between the selected further first and/or second attributes, is also displayed.

2. The method of claim 1, wherein the selection of the first subregion is performed by inputting via an input unit, wherein the selected content is displayed on the display surface.

## Revendications

1. Procédé de sélection d'une information comprenant des premiers contenus et des seconds contenus,
dont les premiers contenus sont définis par des premiers attributs et les seconds contenus sont définis par des seconds attributs,
une relation fonctionnelle entre lesdits premiers contenus et lesdits seconds contenus étant assurée par le fait
qu'un dispositif affichable en tant que premier contenu ou un procédé affichable en tant que premier contenu conditionne l'actionnement d'un autre dispositif affichable en tant que second contenu ou l'exécution d'un autre procédé affichable en tant que second contenu,
pour l'affichage sur une surface d'affichage d'un écran, comprenant les étapes suivantes :
- déterminer les dimensions de la surface d'affichage,
- sélectionner un premier sous-ensemble de premiers attributs,
par quoi un premier sous-ensemble de premiers contenus, ledit premier sous-ensemble de premiers contenus ayant lesdits premiers attributs, et un second sous-ensemble de seconds contenus, ledit second sous-ensemble de seconds contenus ayant lesdits seconds attributs, sont sélectionnés, lesdits seconds attributs ayant une relation fonctionnelle avec lesdits premiers attributs dudit premier sous-ensemble sélectionné de premiers contenus,
- indiquer si les informations sélectionnées peuvent être affichées sur la surface d'affichage ou dans quel mesure la surface d'affichage est dépassée lorsque les informations sont affichées,
- afficher une invite pour sélectionner d'autres premiers attributs et/ou seconds attributs,
- afficher les informations sélectionnées sur la surface d'affichage, des troisièmes contenus étant affichés aussi, indiquant un état de la relation temporelle entre les autres premiers et/ou seconds attributs sélectionnés.

2. Procédé selon la revendication 1, dans lequel la sélection du premier sous-ensemble est effectuée par une entrée au moyen d'une unité d'entrée, les contenus sélectionnés étant affichés sur la surface d'affichage.
